# EUROPEAN PATENT APPLICATION

(11) **EP 0 609 617 A2**
(43) Date of publication of application: **10.08.1994**
(21) Application number: 93309619.0
(22) Date of filing: 01.12.1993
(51) Int. Cl.: G06F 1/18

(54) **Recording and reproducing apparatus**

(30) Priority: 01.12.1992 JP 321063/92; 21.01.1993 JP 8596/93; 27.07.1993 JP 205682/93
(71) Applicant: MATSUSHITA ELECTRIC INDUSTRIAL CO., LTD., Kadoma-shi, Osaka-fu, 571 (JP)
(72) Inventor: Oshima, Mitsuaki, Kyoto (JP); Tan, Satoshi, Katano-shi, Osaka (JP); Kuwamoto, Makoto, Hirakata-shi, Osaka (JP)
(74) Representative: Senior, Alan Murray

(57) **Abstract**

Herein disclosed is an information recording/reproducing apparatus being adaptable to both a disk-shaped recording medium and a card-shaped recording medium. The information recording/reproducing apparatus comprises a loading mechanism adapted to position the disk-shaped recording medium 11a having an optical recording surface on one side and a magnetic recording surface on the other side, a recording/reproducing disk 11 with a cartridge 11b, and an IC card 12, a space 20 formed in the recording/reproducing apparatus in which a retractable magnetic head 16, a light pickup 17, a clamper 14, a socket connected with the IC card are disposed in the vicinity of the loading mechanism. The recording/reproducing disk 11 and the IC card can be loaded in the commonly usable space 20.

## Description

The present invention relates to an information recording and reproducing apparatus made use for recording and reproducing information.

An information processing apparatus such as a computer is, in general, used with a disk-shaped information recording and reproducing medium or a card-shaped electronic circuit block of with electric connectors as a means to exchange information between another information processing systems. In recent years, there has been developed an information processing apparatus of a type in adaptable to both the disk-shaped information recording/reproducing medium and the card-shaped electronic circuit block, such as a game machine or a notebook computer.

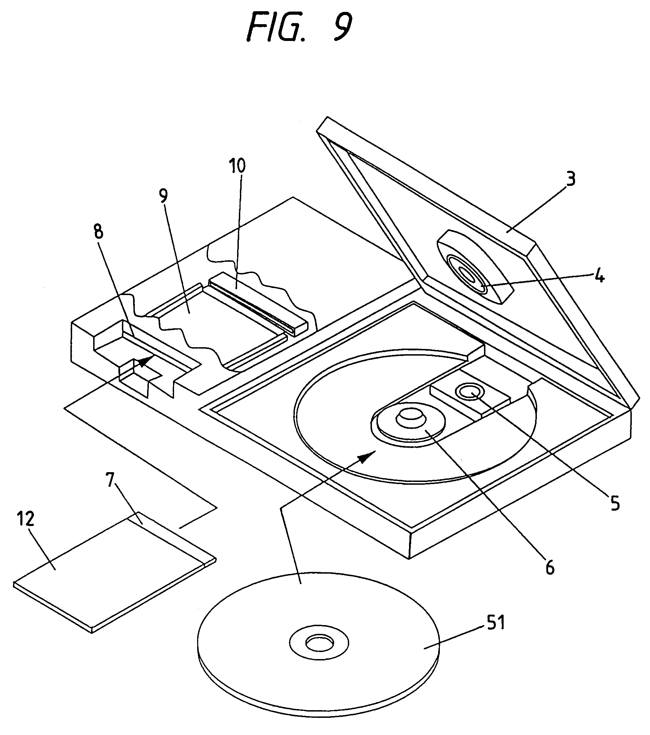

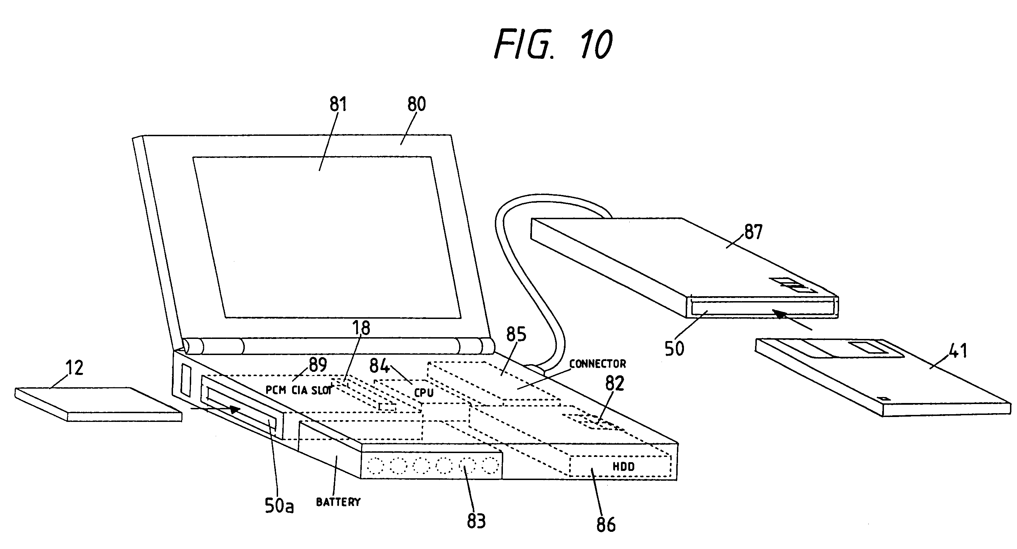

An example of a conventional information recording/reproducing apparatus of such type adaptable to both the disk-shaped information recording/reproducing medium and the card-shaped electronic circuit block will be now described referring to FIGS. 9 and 10.

In FIG. 9, there is shown an information recording/reproducing apparatus equipped with a reproducing unit used for a CD-ROM of a 12 cm diameter (hereinafter referred as a 12 cm CD-ROM) and a recording/reproducing unit for an IC card.

When reproducing information from a 12 cm CD-ROM, an upper lid 3 of the recording/reproducing unit is opened and the 12 cm CD-ROM 51 is placed on a lower clamper 6 fitted to a spindle motor. An upper clamper 4 which is used to limit the movement of the 12 cm CD-ROM in the upward and downward directions is attached on an upper surface of the upper lid 3. When the upper lid 3 is closed, the 12 cm CD-ROM is positioned by the upper clamper 4. After the motor starts to be driven, a light pickup 5 starts reading information recorded on the CD-ROM to reproduce it.

A PC card 12 is now internationally standardized to PCMCIA (Personal Computer Memory Card International Association) Standard Ver. 4.1. Such PCMCIA card (also referred as a PC card) has outer dimensions measuring, for example, 54 mm in width, 85.6 mm in length and 3.3 mm in thickness, being so called "credit card size", in the case of TYPE 1 of PCMCIA Standard. The IC card 12 is equipped with a connector 7 at one end. When reproducing or recording information from or into the IC card 12, the IC card 12 is inserted with the connector at the head into a socket 10. Via the connector 7, the information is recording into or reproduced from the IC card 12.

A typical CD-ROM is not equipped with a cartridge. In consequence, there are used two types of manner to load the CD-ROM in an information recording/reproducing system, i.e., a lid type as stated above and a loading mechanism type with a tray. In either case, it is necessary to accurately position the medium for a good reproduction. The lower clamper 6 becomes a reference for when positioning the medium. The upper clamper 4 fitted to the lower clamper 6 can sufficiently move in both vertical and horizontal directions so as to prevent the lower clamper 6 from being out of the position. The CD-ROM 51 is positioned with respect to its axial and radial directions by the upper and lower clampers 6,4.

In the conventional information recording/reproducing apparatus with the above structure, it is however necessary to provide separate spaces or rooms to receive the 12 cm CD-ROM 51 and the PC card 6, respectively. This prevents reduction of overall dimensions of the apparatus.

To the contrary, the recent trend in portable computer design has been toward miniaturization, for example, from a notebook personal computer of a A4 size to a sub-notebook personal computer of a A5 size.

FIG. 10 is a perspective view of a conventional sub-notebook personal computer 80. The sub-notebook personal computer 80 comprises a display 81, a keyboard 82, a CPU 84, a battery 83, a hard disk drive (HDD) 86, a slot 87 receiving an IC card 12 meeting PCMCIA Standard therein, and an opening 50a through which the IC card 12 is inserted into another slot 89 formed in the computer body to receive the IC card 12. If the computer 80 is in a A5 size, the dimensions have to be within a width of 210 mm and a length of 165 mm. As clearly seen from FIG. 10, about one-fourth of the volume of the computer is occupied by the battery 83, another one-fourth by the HDD 86, and still another one-fourth by the slot 89 for the IC card 12 of PCMCIA Standard. The remaining only one-fourth of the volume of the computer is occupied by the CPU 84, an external connector 85 and other circuits. As a result, there is no room for a drive 87 used to drive a 3.5 inch floppy disk For the above reason, almost all of the conventional commercially available sub-notebook personal computers in an A5 size are, normally or optionally, quipped with respective externally connectable floppy disk drives (FDDs), as shown in FIG. 10. The user of such computer needs to always carry the externally connectable floppy disk drive 87 for a 3.5 inch floppy disk along with the body the sub-notebook computer. This largely spoils portability that is an essential function of such computer. There is, thus, a demand to integrally build a slot for a PCMCIA IC card and a drive for a 3.5 inch floppy disk in a portable personal computer in the A5 size.

To overcome the above problem, an object of the present invention is to provide an information recording/reproducing apparatus having a compact size, in which both a slot and a drive are built-in to use as media an IC card such as a ROM IC cartridge for a computer game, a PCMCIA IC card or the like along with a floppy disk.

The present invention therefore provides an information recording/reproducing apparatus which is operable on both a disk-shaped recording medium and an IC card mounted in the same space formed in said information recording/reproducing apparatus.

Unit carrying out recording/reproducing operation are packed within the same space and each of the media can be inserted through the same opening, thereby realizing reduced overall dimensions of the apparatus.

With the above arrangement, the information recording/reproducing is adaptable to a disk-shaped recording medium cased in a cartridge, an IC card used as a card-shaped recording medium, a floppy disk or a CD ROM as a disk-shaped recording medium or a recording medium having an optical surface on one side and a magnetic recording surface on the other side.

When the disk-shaped recording medium is a floppy disk whereas the card-shaped recording medium is an IC card, the information recording/reproducing apparatus of this invention comprises a socket connected with the IC card, a socket guide having a moving mechanism shifting the socket, and a discriminating means detecting a outer configuration of the medium to discriminate the floppy disk from the IC card, said socket being retractable from said commonly used space when said discriminating means detects a presence of the floppy disk. With such arrangement, this invention can realize a reduction in overall dimensions of the information recording/reproducing apparatus.

The above and other features and aspects of the present invention will become more apparent upon reading the following detailed description in conjunction with the accompanying drawings, in which:
FIG. 1 is a perspective view of an information recording/reproducing apparatus according to a first embodiment of this invention, along with a floppy disk and an IC card used therein;
FIG. 2 is a sectional view taken along the line A-A of FIG. 1;
FIG. 3 is a perspective view, with portions broken away, of a loading mechanism of the information recording/reproducing apparatus in FIG. 1;
FIG. 4 is a perspective view of another loading mechanism;
FIG. 5 is a perspective view, with portions broken away, of an information recording/reproducing apparatus according to a second embodiment of this invention, along with a floppy disk and an IC card used therein;
FIG. 6 is a perspective view of a loading mechanism of a tray type of the information recording/reproducing apparatus according to a third embodiment of this invention:
FIGS. 7A through 7C are sectional views illustrating operations of the loading mechanism of the information recording/reproducing apparatus in FIG. 6;
FIG. 8 is a perspective view of an information recording/reproducing apparatus of a lid type according to a fourth embodiment of this invention;
FIG. 9 is a perspective view of a conventional lid type information recording/reproducing apparatus;
FIG. 10 is a perspective view of a conventional sub-notebook size personal computer.
FIG. 11 is a a perspective view of a sub-notebook personal computer employing the information recording/reproducing apparatus according to the first and second embodiment of this invention; and
FIG. 12 is a personal-computer of a desk-top type employing both an information recording/reproducing apparatus adaptable to both an IC card and a CD ROM according to the first embodiment and another information recording/reproducing apparatus adaptable to both the IC card and the CD ROM according to the second embodiment.

Description will be now made of preferred embodiments of an information recording/reproducing apparatus according to this invention referring to the accompanying drawings.

### (Embodiment 1)

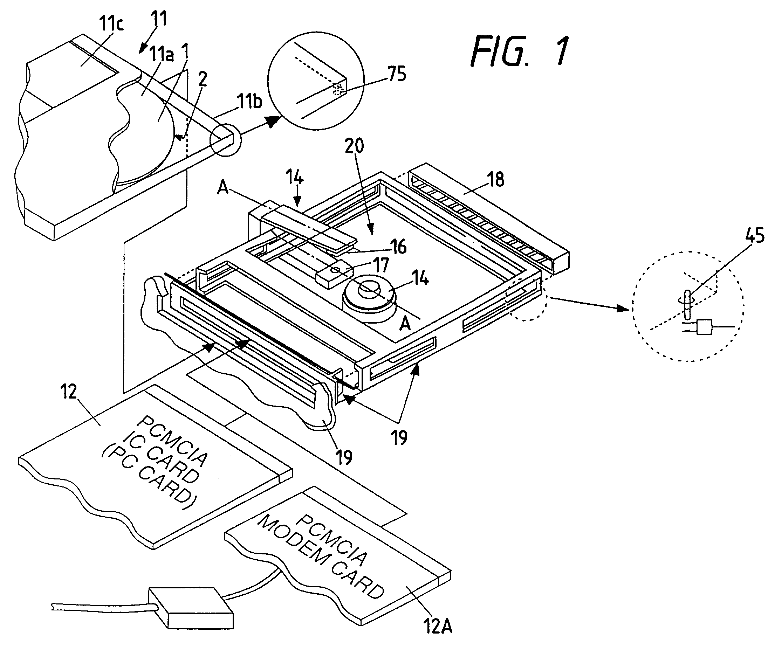

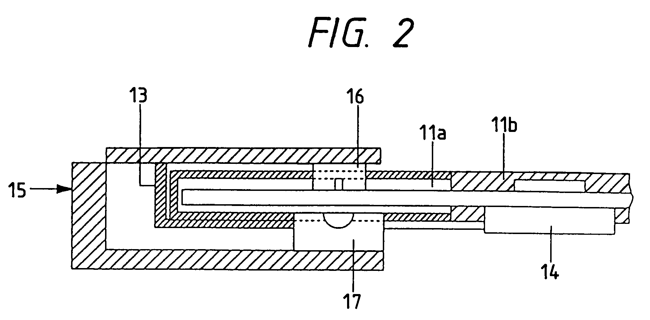

FIG. 1 is a perspective view, with a portion broken away, of a part of an information recording/reproducing apparatus according to a first embodiment of this invention, and FIG. 2 is a sectional view taken along the line A-A of FIG. 1.

In FIGS. 1 and 2, reference numeral 11 denotes a recording/reproducing disk comprising a disk-shape recording medium 11a as a CD ROM having a magnetic recording layer and a cartridge 11b. The disk-shape recording medium 11a has opposing two surfaces, one of which is used for optical recording and the other is used for magnetic recording. The cartridge 11b is provided with a shutter 11c on a left side thereof as shown in FIG. 1. The shutter 11c is slidably opened to expose the recording medium 11a upon reproducing information recorded in the recording medium 11a. The cartridge 11b is also provided With a magnetic layer discriminating hole 75 in a corner of its bottom surface. The magnetic layer discriminating hole 75 is useful when the apparatus discriminates a presence of the disk. Reference numeral 12 denotes an IC card, whose external dimensions measuring 54mm in width, 85.6 mm in length and 3.3 mm in thickness in the case of Type 1 of PCMCIA standard; 54mm in width, 85,6 mm in length and 5.0 mm in thickness in the case of Type 2; and 54mm in width, 85.6 mm in length and 10.5 mm in thickness in the case of Type 3, so-called "a name-card size". (These IC cards of Types 1, 2 and 3 will be hereinafter simply referred as IC card.) The information recording/reproducing apparatus comprises a loading mechanism 13 serving to load the recording/reproducing disk 11 and the PC card 12. The loading mechanism includes a frame which forms a space 20 therein to accommodate in common both the recording/reproducing disk 11 and the IC card 12 or a MODEM card 12A of PCMCIA. The recording/reproducing apparatus further includes a clamper 14 attached to a rotary shaft of a spindle motor, a recording/reproducing head unit 15 composed of a magnetic head 16 and a light pickup 17, a socket 18 into which a connector of the IC card 12 is fitted, and a body 19. Either the recording/reproducing disk 11 or the IC card 12 is inserted into the loading mechanism 13 when the information is recorded or reproduced.

Since the magnetic layer discriminating hole 75 is formed in the cartridge 11b, the disk media 11a of the CD ROM with a magnetic layer a does not cause a discriminating pin 45 to be pushed down when inserted into the space 20. After the insertion of the disk 11a, the magnetic head 16 is brought to touch the magnetic layer 1 of the disk 11a. In another manner, an identifier code is recorded on the magnetic layer 1 of the CD ROM, the magnetic head 16 is lowered only when a CPU identifies the reproduced identifier code, whereby a CD ROM without the magnetic layer 1 is prevented from being damaged. When the recording/reproducing disk 11 is in a recording/reproducing position, the recording medium 11a is positioned with respect to the upward and downward directions by the clamper 14, then the magnetic head 16 and the light pickup 17 start recording/reproducing operation. As shown in FIG. 2 that is a sectional view taken along the line A-A of FIG. 1, the magnetic head 16, the light pickup 17 and the clamper 14 occupy the space 20 during the recording or reproducing operations, which could be occupied by the inserted cartridge 11b.

On the other hand, when the recording/reproducing disk 11 is not inserted, the magnetic head 16, the light pickup 17 and the clamper 14 are all retracted and absent in the space 20 so as to avoid a crush with the cartridge 11b when the cartridge 11b is loaded and to prevent from being damaged by the crash. Incidentally, exterior dimensions of the cartridge 11b in this embodiment measure, for example as a disk cartridge, 125 mm in width W₂ (a transversal length with respect to a direction to which the cartridge is inserted), 135 mm in length of 135 mm and 7 mm in thickness in the case of a CD ROM. A floppy disk has exterior dimensions measuring 90 mm in width W₂, 94 mm in length and 3 mm in thickness of 3 mm. The IC card 12 of PCMCIA has, on the other hand, a width W₁ of 54 mm. Therefore, W₂ is larger than W₁ (W₂ >W₁ ). A difference in width between W₁ and W₂ is effectively used to mechanically discriminate the disk from the IC card when either of which is inserted. Further, since the IC card 12 of TYPE 1 or 2 is thinner than the CD ROM cartridge, the IC card 12 can be housed in the space 20 that would also receive therein the recording/reproducing disk 11.

Next description will be of a manner to discriminate the W₁ from W₂ described above and to change the loading operation between the IC card and the disk.

The description will be made of a case that the IC card 12 of TYPE 1 or TYPE 2 is inserted into a CD ROM drive, as an example.

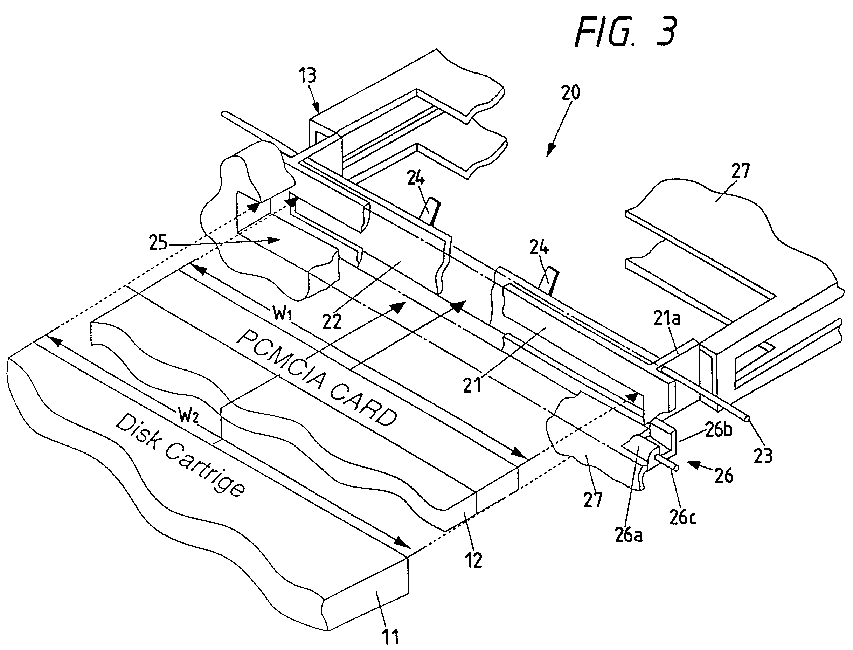

FIG. 3 is an enlarged view of the loading mechanism 13 of FIG. 1. As shown in FIG. 3, the loading mechanism 13 comprises a flap 21 through which the recording/reproducing disk 11 is inserted and another flap 22 through which the IC card is inserted. The flaps 21,22 are rotatable about a transversely extending shaft 23 to be opened and closed, respectively. These flaps 21,22 for the disk 11 and the IC card 12 are normally applied a force by a spring 24 so as to be closed. In front of the flap 21 for the disk 11, a disk guide 27 is disposed to guide the recording/reproducing disk 11 when the recording/reproducing disk 11 is lid into the apparatus. A hook 26 is disposed in the vicinity of an opening formed in the disk guide 27 for the disk 11 to control open and close of the flap 21.

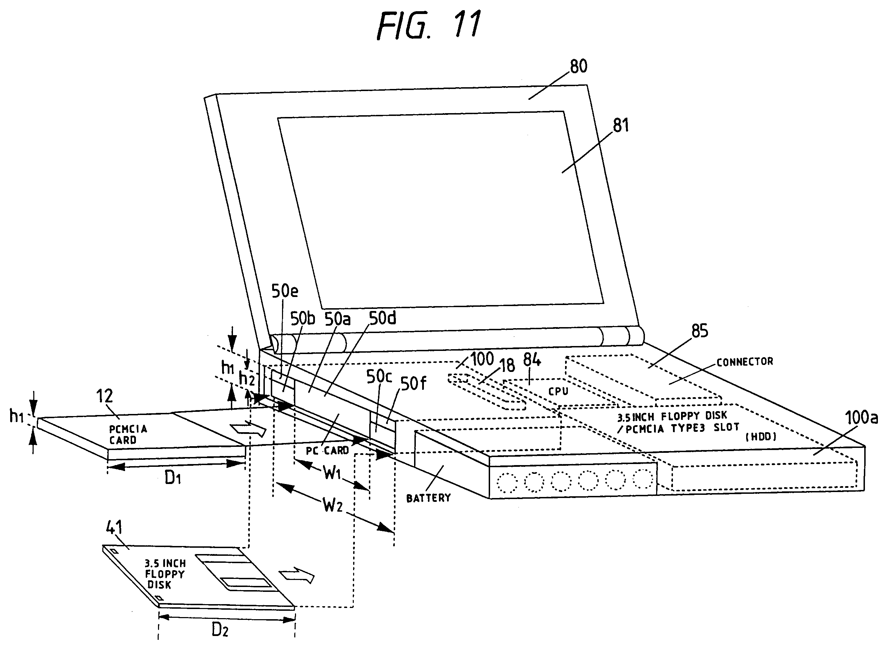

In the case of this loading mechanism 13, the flap 22 for the IC card 12 is freely opened and closed. The an operator inserts the IC card 12, the IC card 12 advances along an IC card guide 21a. A socket 18 (not shown) is disposed at the back of the space 20 and is locked and fixed in a forward position. When the IC card 12 is further pushed by hand, an electric connector of the IC card 12 is brought into contact with an electric connector of the socket 18, thereby enabling signal transmission therebetween. As stated above, the Width W₂ of the cartridge 11b of the recording/reproducing disk 11 is wider than the width W₁ of the IC card 12 if the recording/reproducing disk 11 is either a CD ROM or a floppy disk. Accordingly, when the recording/reproducing disk 11 is inserted through an opening 25, the cartridge 11b of the recording/reproducing disk 11 pushes a claw 26a of the hook 26 in its advancing direction so that the hook 26 is rotated about a shaft 26c transversely extending in the disk guide 27 and the flap 21 for the disk 11is fixed. A lock claw 26b which has fixed the socked 18 in the forward position then comes off so that the recording/reproducing disk 11 can advance further with the flap 21 for the disk 11 being rotatably moved. At the same time, the socket 18 is released from its fixation and is pushed by the disk cartridge of the disk 11 back into a backward position. As a result, the disk cartridge can reach the rearmost position. FIG. 3 illustrates a structure of the information recording/reproducing apparatus whose CD ROM drive is adaptable to the IC cards of both TYPE 1 and TYPE 2. If the IC card of TYPE 3 is inserted into the CD ROM drive or the IC card is inserted into the floppy disk drive 100 (shown in FIG. 11), since the thickness of the IC card is greater than a height of an opening 50a (shown in FIG. 11) through which the IC card is inserted, it is necessary to make the height of the opening 50a for the IC card be greater than that of an opening 50b for the disk, as shown in FIG. 11, whereby the card can be surely inserted.

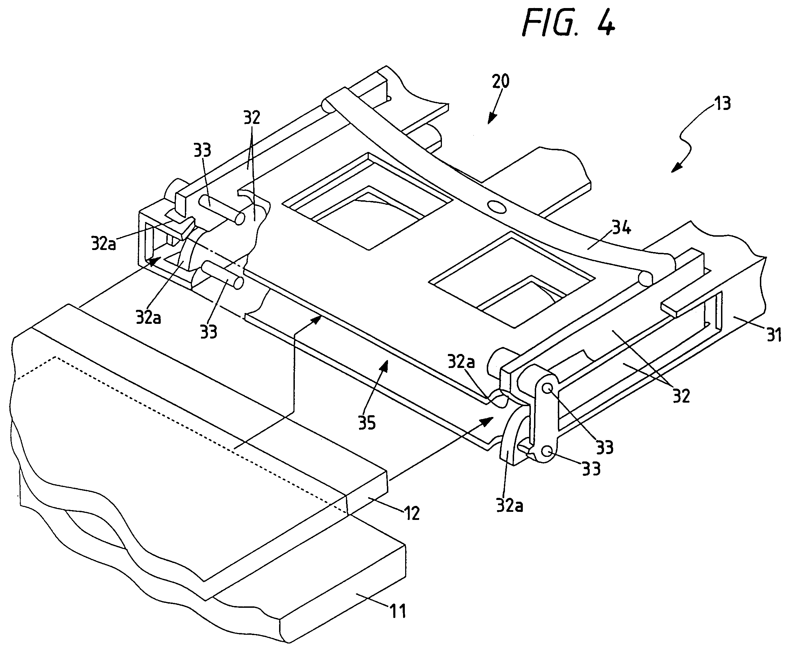

Referring to FIG. 4, there is depicted another loading mechanism 13. In FIG. 4, the loading mechanism 13 includes a disk guide 31 guiding a recording/reproducing disk 11 and an IC card guides 32 guiding an IC card 12. The IC card guide 32 is made up of an upper portion and a lower portion. Rounded portions 32a are formed on the upper and lower portions inside an opening 35, respectively, so as to face to each other. Two shafts 33 are transversely extending and inserted into the upper and lower portions of the disk guide 33, respectively, so that the mating rounded portions 32a can be rotated about the respective shafts 33. A plate spring 34 is provided to prevent the upper and lower portions of the IC card guide 32 from being rotated in respective directions such as to depart from each other.

In the above structure, the IC card 12 is inserted along the IC card guide 32. When the recording/reproducing disk 11 is inserted, the IC card guide 33 is forced to be widen in the transversal direction by the cartridge of the disk 11 since a width W₁ of the IC card guide 32 is greater than the width W₂ of the recording/reproducing disk 11. As such, the recording/reproducing disk 11 can be inserted into the IC card guide 32 whose width has been widened. In this embodiment, both of the upper and lower portions of the IC card guide 32 are rotated about the respective shafts 33. It is, however, possible that either one of the upper and lower portions of the IC card guide 32 is rotatably moved and the other is fixed. It is also possible to form the IC card guide 32 with only one rotatable portion. It is also possible that the IC card guide 32 is not rotated but linearly moved. The same effect can be expected from the above structures.

With the above structure, the information recording/reproducing apparatus can be used with both a recording/reproducing disk 11 such as a CD ROM with a magnetic recording layer, an optical disk, etc. and the IC card to carry out recording or reproducing the information, if either of which is received in the space 20. In addition, units carrying out transmission or record/reproduction of information are packed in the space 20 so that the overall dimensions of the apparatus can be reduced. Since a means for discriminating a CD ROM with a magnetic recording layer from a normal CD ROM, it is possible to prevent the normal CD ROM from being damaged due to a contact with the magnetic head.

### (Embodiment 2)

Next description will be made of a second embodiment of this invention by way of an information recording/reproducing apparatus for use with a 3.5 inch floppy disk and an IC card.

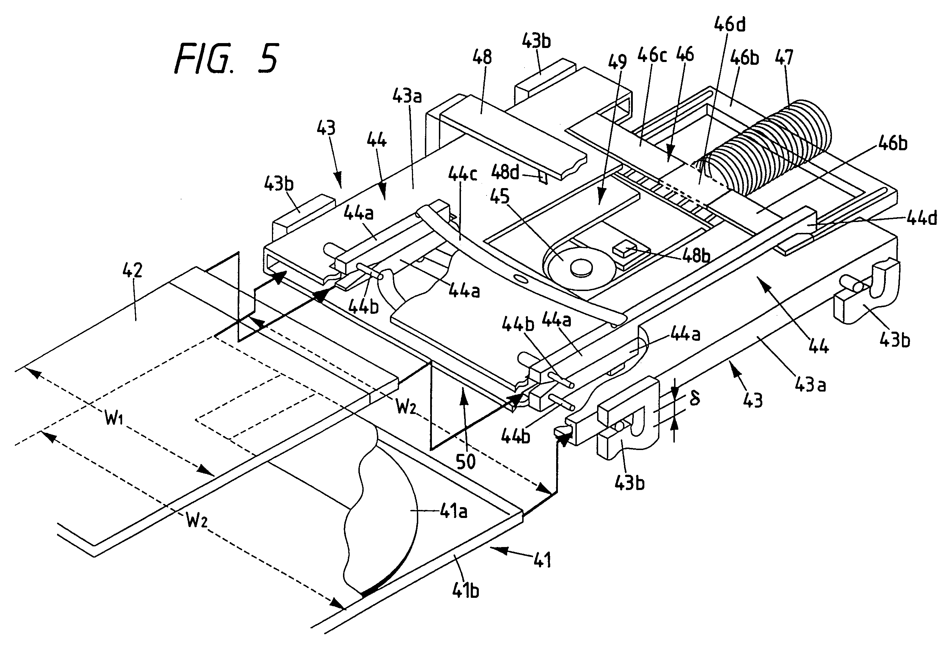

FIG. 5 is a perspective view of an information recording/reproducing apparatus according to the second embodiment. In FIG. 5, a floppy disk 41 comprises a magnetic recording medium 41a and a cartridge 41b. An IC card 42 has, for example, an exterior dimensions measuring 54 mm in width, 85.6 mm in length and 3.3 mm in thickness, that is, so-called a name-card size, as an IC card of PCMCIA TYPE 1. Hereinafter, such IC card will be simply referred as an IC card. The recording/reproducing apparatus comprises a floppy disk loading mechanism 43 serving to load a floppy disk 41, an IC card loading mechanism 44 serving to load the IC card 42, a clamper 45 attached to a rotary shaft of a spindle motor, a socket 46 to which a connector of the IC card 42 is fitted, a coil spring 47 forcing the socket 46 toward an opening 50, a magnetic head unit 48 including two opposing magnetic heads 48b. A space 40 is formed in the information recording/reproducing apparatus to receive either the floppy disk 41 or the IC card 42.

When information is recorded or reproduced, either the floppy disk 41 is inserted in the floppy disk loading mechanism 43 or the IC card is inserted in the IC card loading mechanism 44. Meanwhile, the cartridge 41b of the floppy disk 41 has an exterior dimensions measuring 90 mm in width, 94 mm in length and 3.3 mm in thickness that is approximately the same with the IC card 42. Therefore, the IC card 42 is possible to be completely received within the space 20 that could be also occupied by the cartridge 41b. In the case of TYPE 2 and TYPE 3 of PCMCIA, it is necessary to increase a height of the space 20 since their thickness are 5.0 mm and 10.5 mm, respectively.

Loading of the IC card 42 into the information recording/reproducing apparatus is carried out as follows. The IC card 42 is led along an IC card guide 44a of the IC card loading mechanism 44, then fitted into the socket 46. The IC card guide 44a is made up of an upper portion and a lower portion. Two shafts 44b transversely extending are inserted in the upper and lower portions of the IC card guide 49a, respectively, as shown. The upper and lower portions of the IC card guide 44a can be rotated about the shafts 44b, respectively, but their rotations are limited by a leaf spring 44c. The socket 46 is movable in the forward and backward directions along a socket guide 46b, although normally applied a force by a spring 47 toward the opening 50. The socket 46 is formed with a groove, in which a hook 44d provided on the IC card guide 44a is caught. Consequently, the socket 46 is fixed in a forward position. Even if a user strongly pushes the socket by hand, the socket remains in the forward position so that an electric contact of the IC card 42 is brought into contact with an electric contact of the socket.

Loading of the floppy disk 41 into the information recording/reproducing apparatus after removing the IC card therefrom is carried out as follows. The floppy disk 41 is inserted along a floppy disk guide 43a of the loading mechanism 43 and positioned by a clamper 45. As stated above, the width W₂ of the floppy disk of PCMCIA Standard is greater than the width W₁ of the IC card. Such difference in width between the floppy disk and the IC card is effectively used to discriminate one from the other. The IC card guide 44a has an upper portion and a lower portion. Rounded portions are formed on the side of the opening 50 on both the upper and lower portions, respectively, so as to face to each other. When the IC card is inserted through the opening 50, the upper and lower portions of the IC card guide 44a can be smoothly widened. In this occasion, the discriminating hook 44d comes out of the engagement with the groove 46c so that the socket 46 becomes movable in the forward and backward directions. The floppy disk 41 is fitted into the socket 46 while pushing it backward.

In order to attain movement of the socket 46 in the floppy disk guide 43 in the both forward and backward direction, the thickness of the socket 46 has to be greater than that of the floppy disk guide 43a. In the case of a floppy disk of PCMCIA TYPE 1, the cartridge 41b of the floppy disk 41 has approximately the same thickness as the IC card 42. This requires a greater thickness to the socket 46. In the case of a normal floppy disk drive of a 3.5 inch size, positioning of the medium is carried out by descending the cartridge 41b of the floppy disk 41 by a distance δ from a level in which the cartridge is inserted (i.e., a depth of the guide groove of the positioning guide 43b shown in FIG. ). Therefore, each of the loading mechanisms 43,44 has to have a predetermined margin in the vertical direction. To this end, a relief is provided in the floppy disk guide 43a to accommodate a part of the socket 46 and the socket guide 46b within a space formed with such relief having a depth δ. Within such formed space, the socket 18 can be moved in the forward and backward directions. This enables an arrangement of an IC socket in the floppy disk drive without necessity to increase the thickness of the floppy disk drive in the case of an IC card of PCMCIA TYPE 2 having a thickness of 5.0 mm.

In the case of a floppy disk of PCAMCIA TYPE 3, it is necessary to increase the thickness of the floppy disk drive to some degree since the floppy disk of PCAMCIA TYPE 3 has a thickness of 10.5 mm. But the increased thickness is considered to be much smaller than a thickness of the two drives to receive different types of floppy disks separately.

In this embodiment, the upper and lower portions of the IC card guide 44a are rotatable, respectively. It is possible that either one of the upper and lower portions are rotated and the other is fixed or omitted. It is also possible that the upper and lower portions of the IC card guide 44a are not rotated but linearly moved.

The socket 46 is so disposed that the IC card 42 is partly projected from the opening 50, whereby the IC card can be easily inserted and removed by hand.

With the above structure, recording and reproducing operations of the 3.5 inch floppy disk 41 and the IC card can be carried out within the same space 49. In other words, since units carrying out recording and reproducing operations are packed within the same space 49, the overall dimensions of the information recording and reproducing apparatus can be largely reduced.

Next description will be made of an example where the information recording/reproducing apparatus according to this invention is applied to a sub-notebook personal computer of an A5 size.

FIG. 11 shows a sub-notebook personal computer of a A5 size 80 mounted a floppy disk drive 100 with an IC card slot according to this invention. In this computer 80, a floppy disk drive 100 containing an IC card slot is disposed in a space in which an IC card slot has been heretofore disposed solely. A length of A5 size is about 165 mm and a length of a 1.5V battery is 50 mm. On the other hand, the floppy disk drive of a IC card slot built-in type can be realized within a width of 100 mm that is slightly greater than a width of 89 mm of the floppy disk. According to an arrangement shown in FIG. 11, the IC card slot and the floppy disk drive can be housed within the sub-notebook personal computer 80 of a A5 size, leaving an allowance of about 15 mm. As obvious from FIG. 11, the 3.5 inch floppy disk 41 has a thickness h₂ of 3.0 mm, which is inserted in the apparatus through openings 50b, 50c and 50a. However, openings 50e and 50f are fixed, thus the height of the openings 50b and 50d is limited to 3.0 mm. The floppy disk 41 can be smoothly inserted with the help of a guide. On this occasion, the IC card 12 of TYPE 1, 2 and 3 having a minimum thickness h₁ of 3.3 mm is prohibited from being inserted through the openings 50b,50c. In consequence, the PCMCIA IC card 12 of any type can be accurately inserted through the opening 50a.

If the information recording/reproducing apparatus of this invention complies with only the IC card 12 of TYPE 1, the drive requires a minimum height of 5.3 mm that is a sum of a height 3.3 mm of the socket 18 and a thickness of the outer frame 46c (shown in FIG. 5) of the socket 18. As shown in FIG. 5, in order to prevent the IC card 12 from crashing with the floppy disk magnetic head opposing to the lower magnetic head 48b, a greater height is required to the drive. To solve this problem, a cutout 46d is provided in the outer frame of the socket to avoid a crash of the IC card with the magnetic head 48a. By this measure, the height of the drive can be reduced by the height of the magnetic head without any trouble in loading and unloading of the IC card because of the provision of the cutout 46d in the outer frame. If another cutout is provided for the lower magnetic head 48b, the thickness of the drive can be more reduced.

In FIG. 5, the magnetic heads 48b are positioned in front of the socket 18 With respect to the opening 50. The IC card 12 has a length D₁ of 85.6 mm that is not far apart from a length D₂ of 94 mm of the 3.5 inch floppy disk 41. When the floppy disk 41 is inserted, the socked 18 is retracted backwards, and pushed back by the spring 47 when the floppy disk 41 is removed. In addition, the discriminating claw 48d provided on the magnetic head arm of the magnetic unit 48 can discriminate a floppy disk from an IC card in such a manner that the arm 48 does not contact with the floppy disk of a height h₂ of 3.0mm, but contacts with the IC card having a height greater than that of the floppy disk. When the IC card is inserted, the discriminating claw 48d discriminates it and the magnetic heads 48b are pushed backward to be automatically retracted. The IC card 12 is then fitted to the socket 46 (18). Because of the presence of the cutout 46d, the magnetic heads 48b do not touch to the socket 46 (18) . At this time, the magnetic heads 48b retract not so as to obstruct the advance of the IC card 12. Therefore, an interior space above the drive 100 becomes available except for the height of the spindle motor. If the upper guide plate of the floppy disk 41 is cut out by a width of the IC card, the floppy drive 100 with a slot for the IC card 12 has the same height as the conventional floppy drive, since the drive requires the minimum thickness of 5 mm that is a sum of the thickness of 3.0 mm of the floppy disk 41, the thickness of the magnetic head 48a and the arm 48, and the thickness of the upper guide plate. In this case, a lower portion of the loading mechanism 44 can also serve as a guide for the IC card 12, leading to reduction of the number of the parts. If the information recording/reproducing apparatus of this invention is adapted to a use with an IC card of TYPE 3 having a thickness of 10.5 mm, it is necessary to provide a cutout 44d of a 54 mm width, in other words, a width W₁ of the IC card 12, in the upper portion of the loading mechanism 44 or provide a recess, whereby a space in which the IC card could be housed is available.

With a use of the conventional floppy disk drive, it is impossible to build-in both the IC card slot and the floppy disk drive in a sub-notebook personal computer. The user needs to carry both such computer and an externally connectable 3.5 inch floppy disk drive, resulting in degradation of portability. The information recording/reproducing apparatus according to this invention contains both the floppy disk drive and the IC card slot, leading to improvement in portability It is a matter of course that floppy disks is dispensable when using a personal computer. On the other hand, IC cards are, in recent years, for not only a use of IC memories as represented in PCMCIA standard but also a use for communications with external systems as represented by a modem card 12A containing an external communication board function. As IC cards, FAX card, SDLL communication card, HDD card, etc. are now commercially available, those which become essential functions to sub-notebook type personal computers. According to this invention, the floppy disk drive and the PCMCIA IC card slot, which are two important functions of a notebook personal computer, can be efficiently integrated in a notebook personal computer.

As shown in FIG. 11, another IC card slot built-in floppy disk drive (HDD) 100a is disposed within a space in which a hard disk drive has been heretofore housed, whereby two floppy disks can be simultaneously read out and wrote in. It is also possible to dispose a hard disk drive (HDD) by inserting a HDD IC card of PCMCIA TYPE 3.

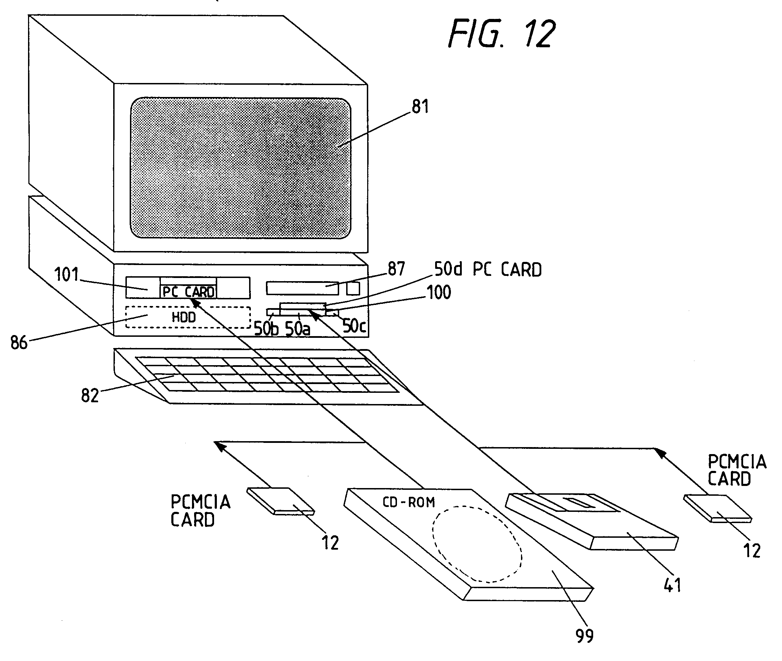

FIG. 12 depicts a personal computer 80 of a desk top type. The personal computer 80 shown in FIG. 12 has been heretofore provided in front slots with a CD ROM drive, two floppy disk drives and a hard disk slot. As a result, there remains no room for an IC card slot. According to this invention, with a use of a CD ROM drive 101 or a floppy disk drive 100, the IC card slot can be added without necessity of newly extending a space for the IC card.

### (Embodiment 3)

Next description will be made of a third embodiment of this invention, where a CD ROM and an IC card are used in a 12 cm CD drive in which a recording medium is positioned by a loading mechanism of a tray type.

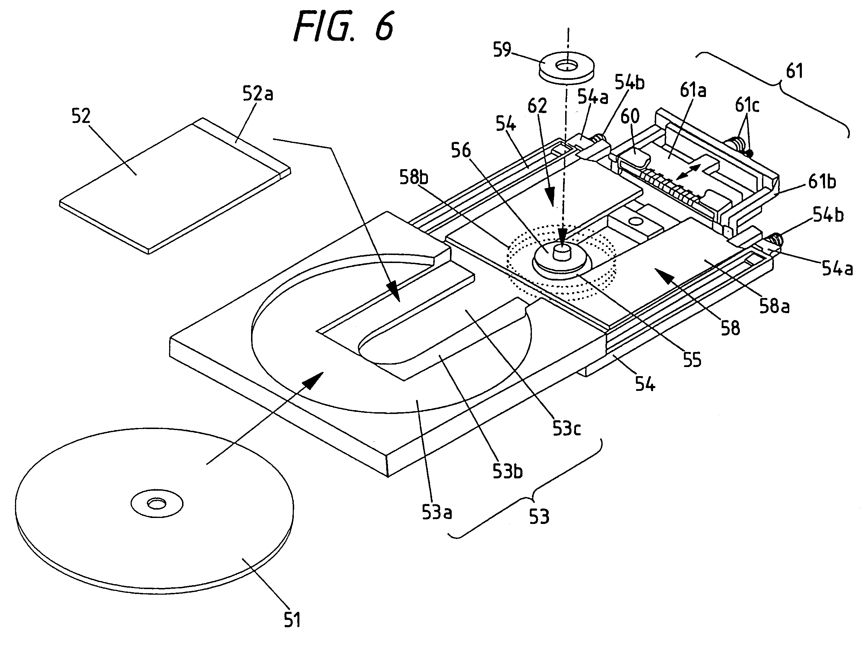

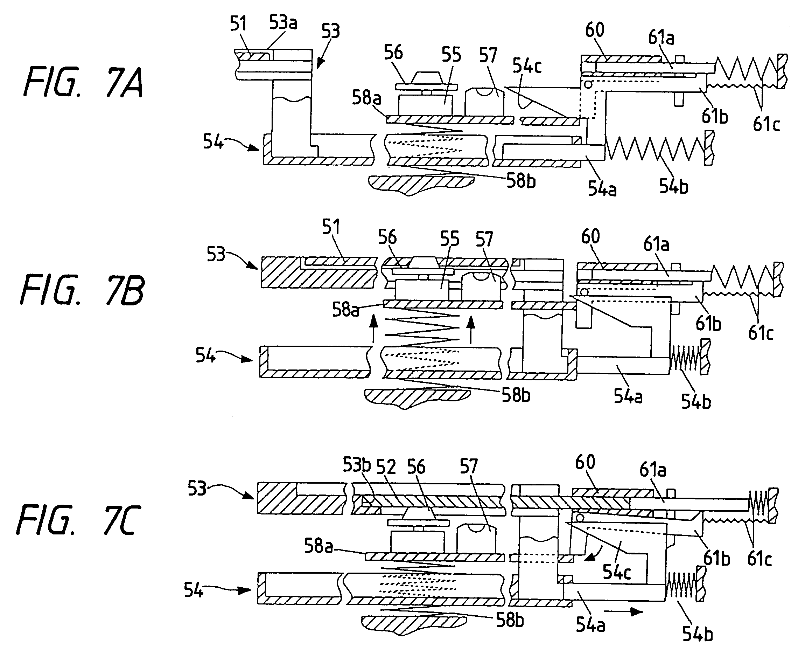

FIG. 6 is a perspective view of a information recording/reproducing apparatus according to the third embodiment of this invention. In FIG. 6, reference numeral 51 denotes a CD ROM whose diameter is 12 cm. An IC card 52 has external dimensions measuring, for example, 54mm in Width, 86 mm in length and 3 mm in thickness, so-called a name-card size. The information recording/reproducing apparatus of this invention comprises a tray 53 mounting the CD-ROM 51 or the IC card 53 thereon to feed them to the apparatus, a tray guide 54 adapted to load the tray 53, a spindle motor 55, a clamper 56 positioning the CD ROM 51 fitted on a rotary shaft of the spindle motor 55, a light pickup 57 (shown in FIGS. 7A through 7C), a loading mechanism 58 supporting the spindle motor 55 and the light pickup 57, which goes up when the CD ROM 51 is mounted thereon, an upper clamper 59 fitted to the clamper 56, adapted to fix the CD ROM 51, a socket 60 to which a connector 52a of the IC card 52 is connected, and an assisting unit 61 assisting loading and unloading of the IC card 52. In the information recording/reproducing apparatus, a space 62 is formed to receive the CD ROM 51 or the IC card 52 therein.

Referring now to FIG. 6 and FIGS. 7A and 7B, loading and unloading operation of the CD ROM 51 will be next described.

When the CD ROM is loaded, the CD ROM 51 is put on a recess 53a formed in the tray 53. The tray 53 is pulled back along the tray guide 54. At this time, a base 58a of the loading mechanism 58 is kept in a retracted position by a hook 54a attached on an end of the tray guide 54, as shown in FIG. 7A. In addition, a cutout 53c is formed in the tray 53 so that the CD ROM can avoid a crash with the clamper 56 or the light pickup 57 when the CD ROM is pulled backward into the space 62. When the tray 53 reaches a predetermined position in the space 62, an end of the tray 53 pushes the hook 54a. At this time, a spring 58b mounted below the base 58a applies an upward force to the base 58a. An inclined surface 54c is formed on an extremity of the hook 54a. Owing to provision of the inclined surface 54c, the base 58a gradually goes up to a position shown in FIG. 7B. At this time, since an assisting plate 61a which assists loading and unloading the IC card slidably inserted from an opening formed in the back of the socket 60 is pushed forward, the hook 61b does not disturb ascent of the base 58a. When the base 58a is raised, the clamper 59 is fitted to the upper clamper 59 to fix the CD ROM 51. As the clamper 56 serves as a reference when the CD ROM 51 is positioned, the upper clamper 59 which comes to fit to the clamper 59 can be sufficiently moved in the vertical and horizontal directions so as to accurately position the CD ROM.

When the CD ROM 51 is removed, the hook 54a is pushed out by the spring 54a accompanied with a discharge of the tray 53. When the tray 54a is pushed out, the base 58a is retracted downward due to an action of the inclined surface 54c of the hook 54a. Accompanied with the retract of the base 58a, the clamper 56 and the light pickup 57 are simultaneously retracted, the tray 53 is then led out along the tray guide 54.

Loading and unloading of the IC card 52 will be next described referring to FIG. 6 and FIG. 7C.

When loading the IC card 52, the IC card 52 is put of the recess 53b formed in the tray 53. The recess 53b is deeper 3 mm than the recess 53a used for the CD ROM 51. The recess 53b on which the IC card 52 is placed is such formed that the connector 52a of the IC card 52 protrudes from the far end of the tray 53 into the inside of the apparatus. The tray 53 advances without suffering from any obstruction until it reaches a predetermined position in the space 62 with a guide of the tray guide 54 in the loading mechanism stated above. At this time, the hook 54a provided on an end of the tray guide 54 is pushed by an end of the tray 53 so that the base 58a gets into an ascendable state. Before the hook 54a is pushed, the IC card 52 is fit to the socket 60. The assisting plate 61 inserted from the back of the socket 60 moves backward and the hook 61b is moved as shown in FIG. 7C. Due to such movement of the hook 61b, the base 58a is prevented from being raised and the clamper 56 and the light pickup 57 are kept in an unaccessible state.

When the IC card is removed, the tray 53 is moved toward the opening. Simultaneously, the assisting plate 61a is pushed back by the spring 61c and the IC card 52 is disconnected from the socket 60. At this time, since the hook 61b is pushed back by the spring 61c, the base 58a gets into an ascendable state. However, the hook 54 is also pushed back, thus the base 58a is kept to be retracted by the hook 54a.

With the above arrangement, it is possible to record or reproduce information on or from the 12 cm CD ROM 51 or the IC card 52 even in an information recording/reproducing apparatus employing a loading mechanism of a tray type. Units carrying out recording and reproducing information are packed in one space 62. This enables reduction of overall dimensions of the apparatus. Moreover, the information recording/reproducing apparatus according to this invention is also adaptable to an 8 cm CD ROM.

### (Embodiment 4)

Next description will be made of a fourth embodiment according to this invention where a CD ROM and an IC card are loaded in a 12 cm CD drive with the structure hereinbefore mentioned.

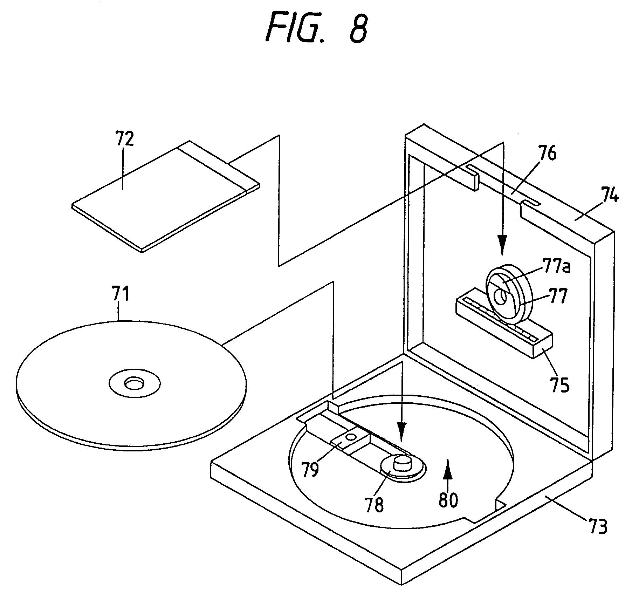

FIG. 8 is a perspective view of an information recording/reproducing apparatus according to this invention. In FIG. 8, reference numeral 71 denotes a CD ROM and 72 an IC card. The IC card 72 has external dimensions measuring, for example, 54 mm in width, 86 mm in length and 3 mm in thickness, so-called a name-card size. The information recording/reproducing apparatus comprises a casing 73, an upper lid 74, a guide 76 adapted to accurately feed the IC card to the socket 75, an upper clamper 77, a lower clamper 78, and a light pickup 79. A space 80 in which the CD ROM 71 or the IC card 72 is housed is formed in the casing 73.

A manner to load or unload the CD ROM 71 is the same with the conventional system.

The lower clamper 78 serves as a reference when the CD ROM 71 is positioned. The upper clamper 77 is effectively movable in the vertical and horizontal directions so as to accurately position the CD ROM 71. The upper clamper 77 is provided with an inclined surface 77a on a side of an opening through which the IC card 72 is inserted. When the IC card 72 is inserted, the upper clamper 77 is retracted upward. The IC card 72 can advance without suffering from any obstruction to reach a predetermined position in the space 80.

The socket 75 is such positioned that an end portion of the IC card 72 protrudes from a front surface of the upper lid 74 when loaded in order to readily insert and remove the IC card by hand. A thickness of the IC card guide 76 and the socket 75 is so determined not as to disturb provision of the upper clamper 77. When the CD ROM 71 is loaded, the guide 76 and the socket 75 are positioned above the CD ROM to avoid a crash with the CD ROM 71.

With the above arrangement, it is possible to record or reproduce information on or from the CD ROM 71 or IC card 72 in the same space 80 formed in the 12 cm CD drive. Units carrying out recording and reproducing are packed with the same space 80, thereby enabling a reduction of overall dimensions of the apparatus. The information recording/reproducing apparatus according to this invention is also adaptable to an 8 cm CD ROM.

The above embodiments are described with a use of an IC card of a name-card size as a card-shaped recording medium. This invention is also effective when an IC card of another size or a magnetic card is loaded in the space.

If a disk-shaped recording medium is a CD ROM whereas a card-shaped recording medium is an IC card, this invention provides an information recording/reproducing system comprising a tray for conveying the CD ROM or the IC card, a tray guide for guiding said tray, a socket connected with said IC card, an assisting unit assisting connection and disconnection of the IC card with the socket, a loading mechanism serving to fit the CD ROM to a disk driving unit which drives the CD ROM, a first loading mechanism provided at an end of the tray guide to control the operation of the loading mechanism, and a second loading mechanism detecting the presence of the IC card and controlling the operation of the loading mechanism. With the above structure, recording and reproducing information on or from a CD ROM or an IC card can be achieved in an information recording/reproducing apparatus of a small size.

If both the CD ROM and the IC card are used, it is possible to provide a CD ROM system on the upper lid to chuck the disk and dispose the socket on the inner surface of the upper lid.

When the disk-shaped recording medium has an optical recording surface on one side and a magnetic recording surface on the other side, it is possible to employ a structure such that a flap is provided in front of an opening of a loading mechanism, through which a recording/reproducing disk cased in a cartridge is inserted.

In addition, a hook is attached to the flap to control open and close of the flap for the disk, the flap used for a disk is provided with another flap through which an IC card can be inserted and a guide is separately provided for the IC card, and a socket is provided on an end of the loading mechanism for the disk to be connected with an IC card. It is also possible to employ a structure with a socket connected with an IC card, an IC card guide serving to fit the IC card to the socket, where the IC card guide has at its end a detecting surface detecting a presence of a recording/reproducing disk cased in a cartridge, the IC card guide being disposed on the inner side of the opening for the disk and being retractable when the recording/reproducing disk is inserted. With the above structure, an information recording/reproducing apparatus in a small size can be realized.

## Claims

1. A recording/reproducing apparatus comprising:
a recording/reproducing unit on which a disk-shaped recording medium is mounted, adapted to record and reproduce information on and from said recording medium;
an electric connector electrically connected with an IC card having an electric connector terminal and an electronic circuit;
said recording/reproducing apparatus having a space therein, which space may receive said disk-shaped recording medium to be loaded when said disk-shaped recording medium is inserted and said IC card when said IC card is inserted.

2. A recording/reproducing apparatus according to claim 1, wherein said disk-shape recording medium has a cartridge.

3. A recording/reproducing apparatus according to claim 1 or 2, wherein said recording/reproducing apparatus further comprises a socket as an electric connector terminal with which said IC card is connected.

4. A recording/reproducing apparatus according to claim 3, wherein said IC card has an electric connector terminal meeting a PCMCIA Standard.

5. A recording/reproducing apparatus according to claim 1, wherein said recording/reproducing apparatus further comprises a socket having thirty four electric connector pins arranged in two rows, said socket being connected with said IC card.

6. A recording/reproducing apparatus according to claim 5, wherein said IC card has a width of 54 mm, a length of 85.6 mm and a thickness of 3.3 mm with respect to a direction in which said IC card is inserted into said recording/reproducing apparatus.

7. A recording/reproducing apparatus according to claim 5, wherein said IC card has a width of 54 mm, a length of 85.6 mm and a thickness of 5.0 mm with respect to a direction in which said IC card is inserted into said recording/reproducing apparatus.

8. A recording/reproducing apparatus according to claim 5, wherein said IC card has a width of 54 mm, a length of 85.6 mm and a thickness of 10.5 mm with respect to a direction in which said IC card is inserted into said recording/reproducing apparatus.

9. A recording/reproducing apparatus according to claim 2, wherein said disk-shaped recording medium is a floppy disk.

10. A recording/reproducing apparatus according to claim 9, wherein said recording/reproducing apparatus further comprises a socket connected with said IC card, a means having a moving mechanism serving to move said socket, a discriminating means discriminating said floppy disk from said IC card, when said discriminating means detects a presence of said floppy disk, said means causing said socket to be retracted from said space.

11. An information processing apparatus comprising:
an electrically connectable terminal built in said information processing apparatus, said electrically connectable terminal being connected with an IC card;
a recording/reproducing unit adapted to record or reproduce information on or from a disk-shaped recording medium of an exchangeable type;
an information inputting unit;
a CPU;
a display; and
a memory; said information processing apparatus being adaptable to both said IC card and said disk-shaped recording medium, either of said IC card or said disk-shaped recording medium being mounted in a commonly usable space formed in said information processing apparatus to be loaded.

12. An information recording/reproducing apparatus according to claim 3, wherein said disk-shaped recording medium is a CD ROM.

13. An information recording/reproducing apparatus according to claim 9, wherein said information recording/reproducing apparatus further comprises a tray conveying said CD ROM and said IC card;
a tray guide guiding said tray;
a socket connected with said IC card;
an assisting unit assisting connection and disconnection of said socket with said IC card;
a loading mechanism serving to mount said CD ROM on a disk driving unit driving said CD ROM;
a first loading mechanism provided on an end of said tray guide controlling operations of said loading mechanism; and
a second loading mechanism provided on said assisting unit detecting a presence of said IC card to control operations of said loading mechanism.

14. An information recording/reproducing apparatus according to claim 9, wherein said information recording/reproducing apparatus further comprises an upper lid adapted to open and close said information recording/reproducing apparatus, a CD ROM system attached on said upper lid chucking said disk and a socket provided on an inner surface of said upper lid being connected with said IC card.

15. An information recording/reproducing apparatus according to Claim 1, 2 or 3, wherein said disk-shaped recording medium has an optical recording surface on one side and a magnetic recording surface on the other side.

16. An information recording/reproducing apparatus according to Claim 9, wherein said information recording/reproducing apparatus comprises a first flap attached in front of an opening for said loading mechanism to open and close said opening, through which a recording/reproducing disk with a cartridge is inserted, a hook adapted to control open and close of said first flap, a second flap provided in said first flap for said IC card, through which said IC card is inserted, a guide guiding said IC card and a socket connecting said IC card with an end of said loading mechanism.

17. An information recording/reproducing apparatus according to Claim 12, wherein said information recording/reproducing apparatus further comprises a socket connected with said IC card and a guide serving to connect said IC card with said socket, said guide having a detecting surface for detecting a presence of said recording/reproducing disk with a cartridge, said guide disposed inside said opening through which said recording/reproducing disk is inserted and being retractable when said recording/reproducing disk is inserted.
